Europäisches Patentamt

European Patent Office

Office européen des brevets

(11) Numéro de publication : **0 038 771**
**B1**

(12) **FASCICULE DE BREVET EUROPÉEN**

(45) Date de publication du fascicule du brevet :
30.01.85

(21) Numéro de dépôt : **81450006.2**

(22) Date de dépôt : **17.04.81**

(51) Int. Cl.⁴ : **B 23 D 47/06**

(54) **Perfectionnements aux dispositifs d'amenage notamment pour tronçonneuses de barres métalliques.**

(30) Priorité : **22.04.80 FR 8009179**

(43) Date de publication de la demande :
**28.10.81 Bulletin 81/43**

(45) Mention de la délivrance du brevet :
**30.01.85 Bulletin 85/05**

(84) Etats contractants désignés :
**CH DE GB IT LI**

(56) Documents cités :
**GB-A- 14 928**
**GB-A- 584 641**
**GB-A- 1 170 139**
**GB-A- 1 307 603**
**US-A- 3 038 647**

(73) Titulaire : **SOCIETE INDUSTRIELLE DE MECANIQUE ET D'ELECTRICITE SIME, Société anonyme:**
**Clos Saint Maurice Rue Jean Jaurés**
**F-17300 Rochefort-sur-Mer (FR)**

(72) Inventeur : **Arnaldi, Claude**
**La Blanchonnerie No. 10**
**F-17870 Breuil-Magne (FR)**

(74) Mandataire : **Thébault, Jean-Louis**
**Cabinet Jean-Louis Thébault 50, Cours de Verdun**
**F-33000 Bordeaux (FR)**

Jouve, 18, rue St-Denis, 75001 Paris, France

## Description

L'invention est relative aux dispositifs d'amenage utilisés conjointement avec les machines de débit, et elle concerne plus particulièrement, mais non exclusivement, ceux qui sont utilisés avec les scies et les tronçonneuses pour les métaux en barre.

Les dispositifs de ce genre mettent en œuvre généralement des moyens de serrage automatisés, tels qu'étaux ou clames, pour la préhension et l'entraînement de la barre à débiter, lesquels sont relativement compliqués, coûteux et nécessitent un entretien.

On connaît également par le document GB-A-1.170.139 un dispositif d'amenée d'une barre comportant une plaque basculante pourvue d'un orifice de passage de la barre et déplacée par la tige d'un vérin. La plaque est guidée par un axe-pivot prenant appui sur deux supports fixes parallèles à la barre, le rappel en position de départ de la plaque étant opéré par un contre-poids. Un tel dispositif présente deux inconvénients majeurs : la plaque n'est pas amovible et correspond à un diamètre déterminé de barre et il n'est pas possible de régler la position de la plaque perpendiculairement à l'axe d'amenage de la barre.

La présente invention concerne un dispositif de ce type et a pour but de pallier lesdits inconvénients en proposant un dispositif plus pratique et d'une grande souplesse d'emploi.

A cet effet, l'invention a pour objet un dispositif d'amenage de métaux en barre, destiné à être associé à une machine de débit telle qu'une tronçonneuse ou analogue, comprenant un organe d'entraînement de la barre monté basculant et susceptible d'entraîner par coincement la barre dans l'une seulement des deux courses aller et retour dudit organe et des moyens de déplacement de ce dernier, ledit dispositif étant caractérisé en ce que ledit organe d'entraînement est une plaque enfourchée sur un coulisseau mobile à va-et-vient, parallèlement à l'axe de la barre à débiter, des moyens étant prévus pour commander et régler le déplacement de la course dudit coulisseau.

Suivant un mode de réalisation préféré, l'organe d'entraînement, ou entraîneur, est constitué par une pièce pourvue d'un orifice de passage de la barre à débiter, de dimensions légèrement supérieures à la section de la barre, ladite pièce étant articulée sur le coulisseau de façon que dans la course aller (ou retour) de ce dernier, la pièce bascule en arrière en coinçant et entraînant la barre et que dans la course retour (ou aller) la pièce soit empêchée de basculer par une butée réglable solidaire du coulisseau.

Avantageusement, le coulisseau est monté sur un support disposé sous la barre à débiter et réglable en position orthogonalement à l'axe de la barre de façon à axer l'entraîneur basculant avec la barre.

D'autres caractéristiques et avantages ressortiront de la description qui va suivre d'un mode de réalisation du dispositif selon l'invention, description donnée à titre d'exemple uniquement et en regard des dessins annexés sur lesquels :

Figure 1 est une vue d'ensemble d'une machine de débit (tronçonneuse) équipée d'un dispositif d'amenage selon l'invention,

Figure 2 est une vue en coupe, à échelle agrandie, du dispositif d'amenage de la figure 1,

Figure 3 représente le dispositif d'amenage en vue de dessus à la même échelle que la figure 2

Figure 4 représente un entraîneur articulé spécialement adapté à une section de barre à débiter,

Figure 5 représente un entraîneur articulé universel qui est une variante de celui de la figure 4,

Figure 6 représente le schéma d'une installation pneumatique destinée à mettre en œuvre le dispositif d'amenage.

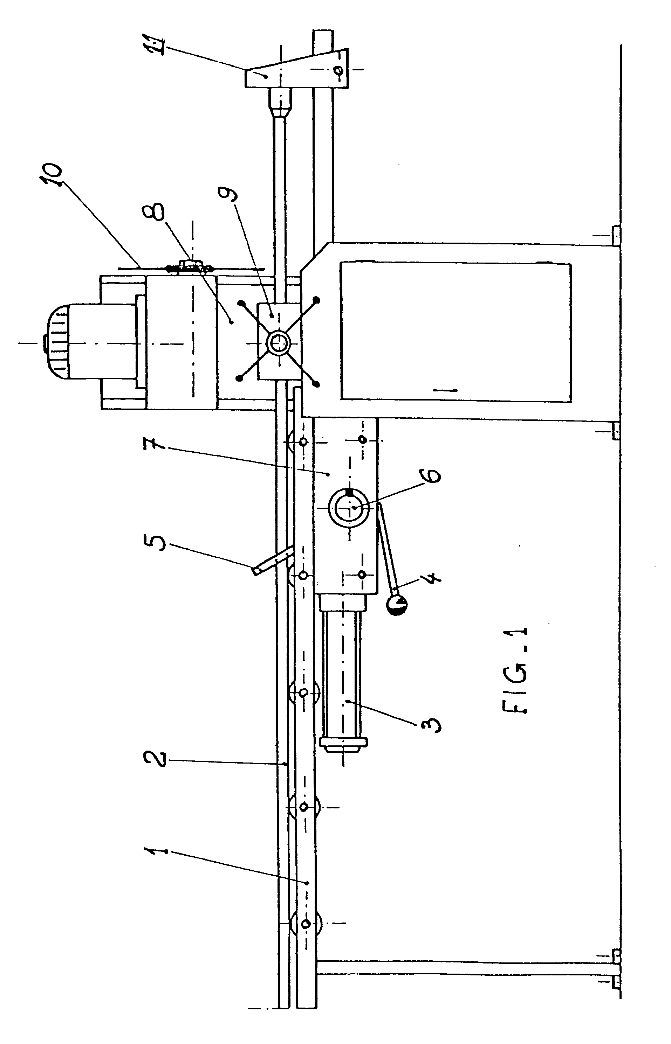

La machine de débit de la figure 1 comporte, d'une manière générale, de gauche à droite, une table à rouleaux 1 sur laquelle repose la barre à débiter 2, un dispositif d'amenage selon l'invention 3, 4, 5, 6, 7, une tronçonneuse 8, son étau 9, sa lame de coupe 10, et sa butée de mise de longueur 11.

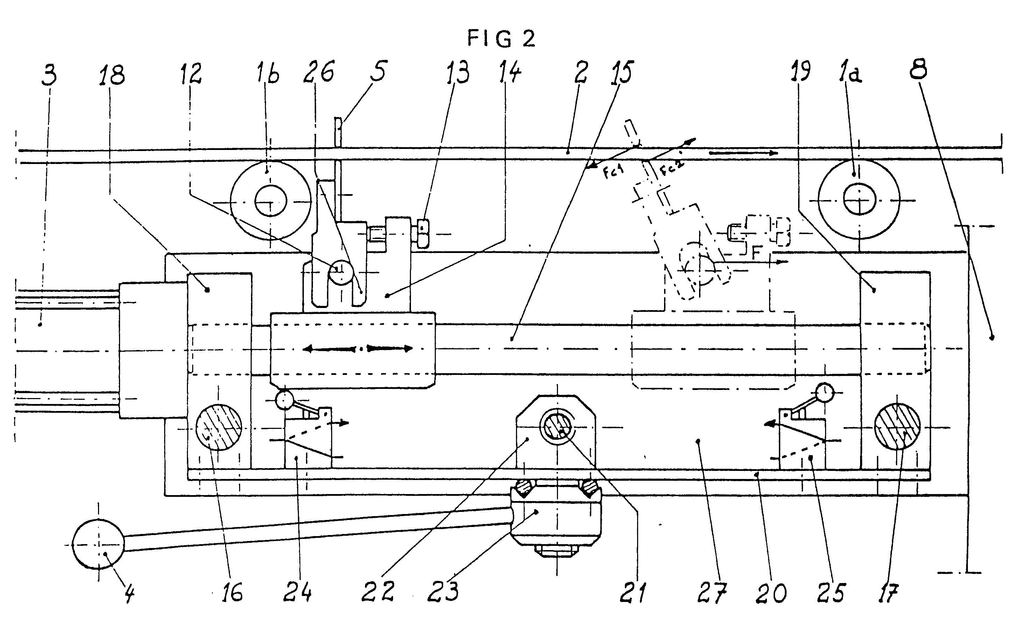

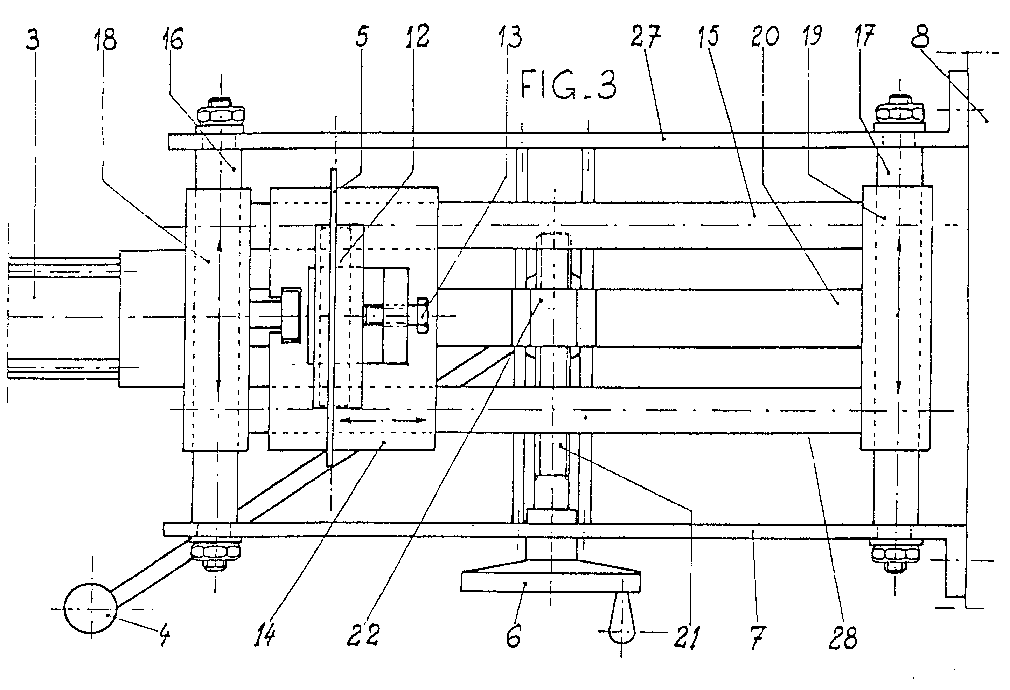

Dans le mode de réalisation du dispositif d'amenage (figures 2 et 3), la barre à débiter 2, qui traverse l'entraîneur articulé 5, repose sur les rouleaux 1a et 1b de la table à rouleaux 1, l'entraîneur articulé 5, qui peut basculer autour de l'axe 12, est représenté en position de coincement de la barre à débiter (traits fins) et en position de repos (traits forts), en appui contre une vis de réglage 13 faisant office de butée, le coulisseau 14, guidé par les barres de guidage longitudinal 15 et 28, est actionné par la tige du vérin pneumatique à double effet 3.

Le support réglable du coulisseau est constitué de deux barres de guidage transversal 16 et 17 qui maintiennent l'écartement des supports 7 et 27, d'une coulisse 18 qui supporte le vérin 3 et une extrémité des barres de guidage longitudinal, d'une seconde coulisse 19 qui supporte l'autre extrémité de ces barres et d'une barre d'accouplement 20 qui relie les deux coulisses précitées. Le déplacement du support, réglable orthogonalement à l'axe de la barre 2, est obtenu par une vis 21 munie d'une manivelle 6, et une noix taraudée 22 solidaire de la barre d'accouplement 20. L'écrou 23 muni du levier de blocage 4 sert à immobiliser le support réglable lorsque le réglage est effectué.

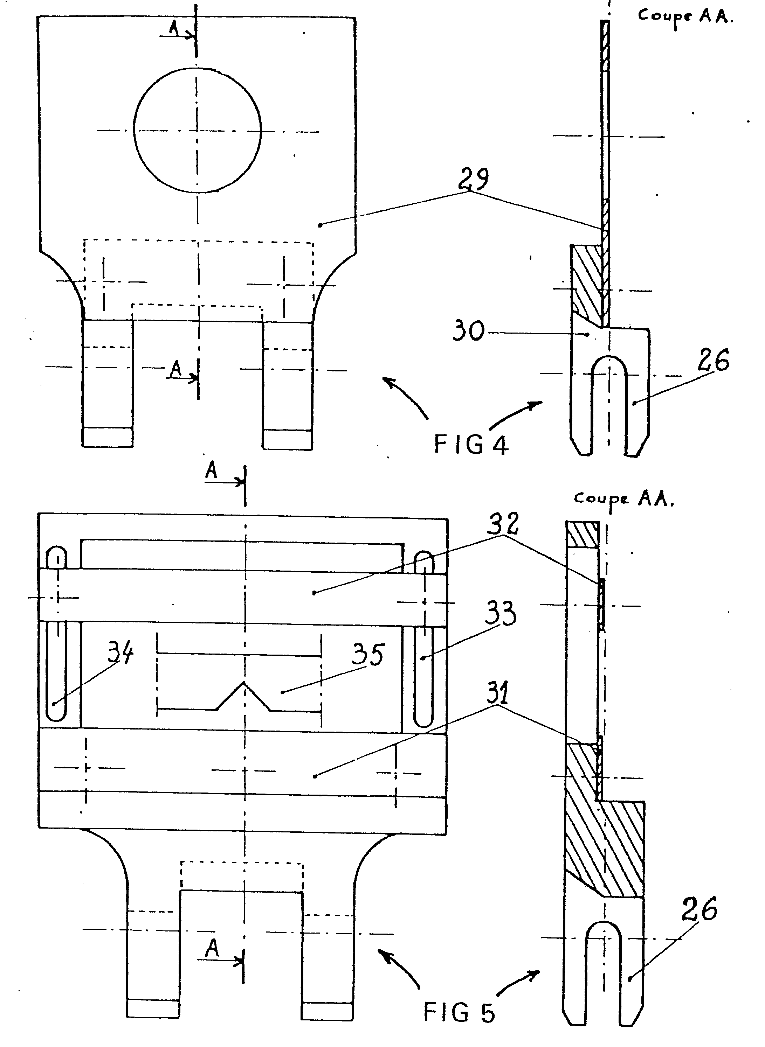

Dans le mode de réalisation de la figure 4, l'entraîneur articulé représenté est un entraîneur de forme adaptée à une seule section de barre à débiter. Il est constitué d'une plaque mince en acier 29, percée selon la section de la barre et d'une monture 30 comportant une fourchette 26 qui constitue, avec l'axe 12 du coulisseau, une articulation permettant un léger déplacement de l'entraîneur par rapport à cet axe, afin que le coincement de la barre s'effectue dans de bonnes conditions.

Dans le mode de réalisation de la figure 5, l'entraîneur représenté est ajustable aux sections les plus diverses de barres à débiter. Sa configuration en ce qui concerne la fourchette 26 de l'articulation est la même que celle de l'entraîneur articulé de la figure 4, mais il est, par contre, agencé pour que la plaque mince 29 de la figure 4 soit remplacée par une lame inférieure en acier 31, fixée sur la monture et distante de 1 mm environ du dessous de la barre à débiter et une lame supérieure également en acier 32, réglable le long des lumières 33 et 34, en fonction de l'épaisseur de la barre à débiter. La lame 35 est une variante de la lame supérieure 32.

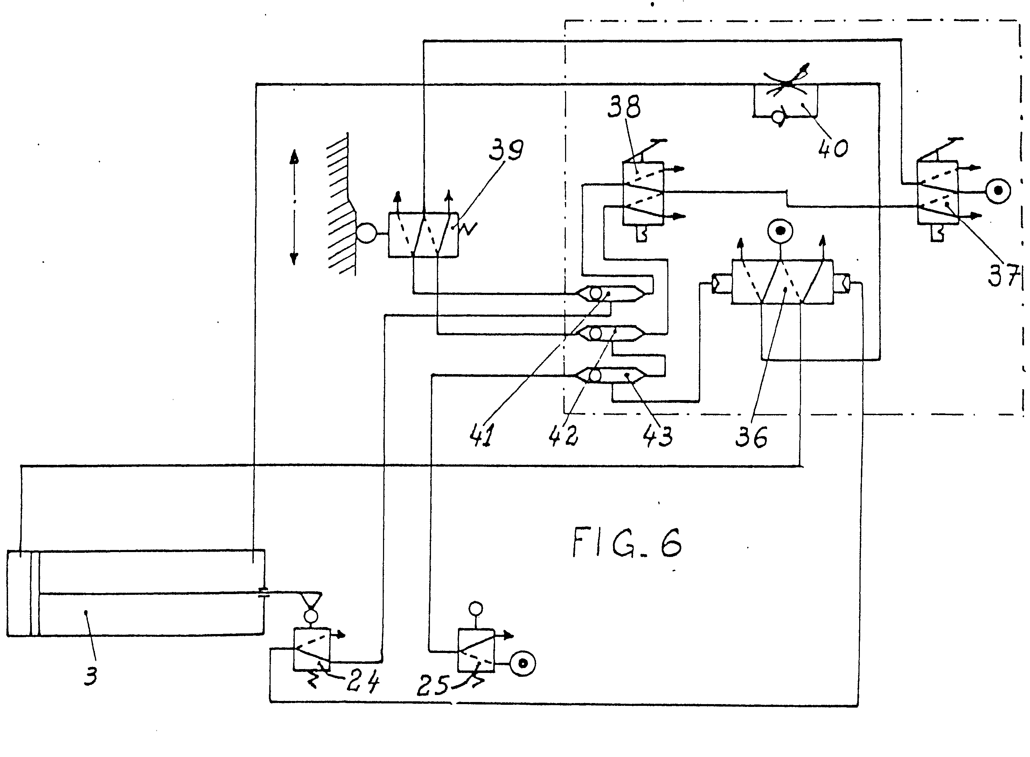

Le schéma pneumatique de la figure 6 représente l'une des nombreuses possibilités de cablage pour l'automatisation plus ou moins poussée des machines de débit équipées du dispositif d'amenage selon l'invention.

Ce schéma pneumatique comporte le vérin 3 dont la course est délimitée par les butées de fin de course 24 et 25, leur sollicitation agissant sur le distributeur de puissance 36 ; pour les inversions de sens, un distributeur à commande manuelle 37 permet de sélectionner soit le cycle manuel, par action sur le distributeur 38, soit le cycle automatique, par la levée et la descente de la lame à l'aide du distributeur 39 ; trois cellules logiques 41, 42 et 43 pour la sélection des circuits selon le choix du cycle de fonctionnement, et un limiteur de débit unidirectionnel 40 destiné à régler la vitesse de translation du coulisseau, c'est-à-dire d'amenage de la barre à débiter.

Dans l'exemple choisi, qui est l'un des plus simples, volontairement, le fonctionnement de la machine de débit est semi-automatique. Ceci implique diverses interventions manuelles de la part de l'opérateur, notamment l'ouverture et la fermeture de l'étau de serrage 9, la coupe de la barre avec la lame 10 (figure 1) et l'éjection du morceau de barre coupé. Seul, le fonctionnement du dispositif d'amenage asservi à la montée et à la descente de la lame de coupe est automatique. L'intérêt de cette automatisation partielle de la machine de débit réside dans la précision des longueurs coupées, dans le gain de temps par rapport à un amenage manuel, et dans l'allègement de la tâche de l'opérateur.

Le fonctionnement et l'utilisation des moyens qui viennent d'être décrits sont les suivants :

Le coulisseau 14 (figures 2 et 3) étant en position de départ (en traits forts), l'opérateur met en place l'entraîneur articulé (facilement interchangeable) sur l'axe 12, le maintient verticalement en appui contre la vis de réglage 13, engage manuellement la barre à débiter à travers l'entraîneur, la serre dans l'étau, positionne transversalement l'entraîneur par rapport à la barre en tournant la manivelle 6 (figures 1 et 3) du support réglable du coulisseau, immobilise ce support à l'aide du levier 4, procède au réglage de la lame supérieure 32 (figure 5) de l'entraîneur articulé, de façon qu'un jeu de l'ordre de 1 mm subsiste entre cette lame et le dessus de la barre à débiter, enfin, il bascule l'entraîneur articulé en position de coincement (en traits fins, figure 2).

L'étau 9 (figure 1) étant ouvert, l'opérateur actionne le distributeur 37 (figure 6) et déclenche ainsi le cycle de fonctionnement automatique du dispositif d'amenage qui est le suivant.

Poussé par la tige du vérin 3 (figures 1, 2 et 3), le coulisseau 14 avance et entraîne la barre à débiter par l'intermédiaire de l'entraîneur articulé que l'opérateur avait pris soin d'incliner en position de coincement. Lorsque le coulisseau arrive en fin de course, il actionne la butée pneumatique 25 (figures 2 et 6), le mouvement du coulisseau s'inverse tandis que, simultanément, sous l'action de son inertie, l'entraîneur articulé qui reprend la position verticale contre la vis de réglage 13 (figures 2 et 3) relâche la barre à débiter qui s'immobilise. L'entraîneur articulé reste dans cette position verticale jusqu'à ce que le coulisseau actionne, en fin de course de retour, l'autre butée pneumatique 24 (figures 2 et 3). A ce moment, le sens de déplacement du coulisseau s'inverse de nouveau tandis que, de nouveau, sous l'action de son inertie, l'entraîneur articulé bascule, cette fois en position de coincement et rend de nouveau la barre à débiter solidaire du coulisseau qui l'entraîne.

Ces mouvements de va-et-vient du coulisseau et de basculement de l'entraîneur articulé se répètent jusqu'à ce que la barre à débiter vienne en appui contre la butée de mise de longueur 11 (figure 1). L'opérateur ferme l'étau de la machine pour que la coupe puisse avoir lieu. La descente de la lame 10 (figure 1) actionne la butée pneumatique 39 (figure 6), ce qui renvoie le coulisseau à sa position de départ. Lorsque le coulisseau atteint cette position, il s'arrête tandis que l'entraîneur articulé reprend de lui-même la position de coincement. Lorsque la pièce est coupée, l'opérateur relève la lame. Il actionne ainsi la butée pneumatique 39 (figure 6) qui met à nouveau sous pression le vérin 3 (figures 1, 2 et 3). L'ouverture de l'étau 9 libère la barre et un nouveau cycle d'amenage analogue à celui qui vient d'être décrit se déroule.

Le cycle décrit ci-dessus se réalise lorsque la longueur de la pièce à couper est supérieure à la course du coulisseau.

Evidemment, lorsque la pièce à couper est plus petite que cette course, le cycle est le même à exception du mouvement de va-et-vient.

A remarquer que le coincement de la barre par l'entraîneur articulé est d'autant plus puissant que celle-ci oppose de résistance à l'avancement. En effet, le couple de coincement occasionné par les forces $Fc_1$ et $Fc_2$ est proportionnel à la force $F$ nécessaire à l'entraînement de la barre.

A noter que la plaque de coincement 29 (figure 4) et les lames inférieure 31 et supérieure 32 (figure 5) de l'entraîneur articulé sont arrondies pour que la barre ne soit pas marquée. Pour le bon fonctionnement de ces entraîneurs articulés, le respect des jeux fonctionnels par rapport à la barre, tels qu'ils ont été définis, est important ; en position de coincement, l'angle d'inclinaison des entraîneurs articulés ne doit pas excéder 30 par rapport à la verticale.

Un tel dispositif permet d'équiper de façon économique les machines de débit, afin d'en augmenter la précision et le rendement et d'alléger ainsi la tâche de l'opérateur.

D'une manière générale, l'invention peut être mise en œuvre toutes les fois où l'on a à déplacer suivant son axe un profilé quelconque en métal ou autre matière, suivant une cadence de répétition quelconque, en vue de lui faire subir une opération quelconque, sciage ou autre.

Enfin, l'invention n'est pas limitée au mode de réalisation représenté et décrit ci-dessus, mais en couvre au contraire toutes les variantes.

## Revendications

1. Dispositif d'amenage de métaux en barre, destiné à être associé à une machine de débit telle qu'une tronçonneuse ou analogue, comprenant un organe (5) d'entraînement de la barre (2) monté basculant et susceptible d'entraîner par coincement la barre dans l'une seulement des deux courses aller et retour dudit organe (5) et des moyens de déplacement de ce dernier, ledit dispositif étant caractérisé en ce que ledit organe d'entraînement (5) est une plaque enfourchée sur un coulisseau (14) mobile à va-et-vient parallèlement à l'axe de la barre à débiter (2), des moyens (3, 24, 25) étant prévus pour commander et régler le déplacement et la course dudit coulisseau (14).

2. Dispositif d'amenage suivant la revendication 1, caractérisé en ce que l'organe d'entraînement, ou entraîneur (5), est constitué par une pièce pourvue d'un orifice de passage de la barre à débiter, de dimensions légèrement supérieures à la section de la barre (2), ladite pièce étant articulée sur le coulisseau (14) de façon que dans la course aller (ou retour) de ce dernier, la pièce bascule en arrière en coinçant et en entraînant la barre et que dans la course retour (ou aller) la pièce soit empêchée de basculer par une butée réglable solidaire du coulisseau.

3. Dispositif d'amenage suivant la revendication 1 ou 2, caractérisé en ce que le coulisseau (14) est monté sur un support (16 à 19) disposé sous la barre à débiter et réglable en position orthogonalement à l'axe de la barre de façon à axer l'entraîneur (5) basculant avec la barre.

4. Dispositif d'amenage suivant l'une des revendications 1 à 3, caractérisé en ce que l'entraîneur (5) est articulé sur le coulisseau (14) à l'aide d'une ou plusieurs fourchettes (26) s'engageant sur un axe orthogonal à l'axe de la barre à entraîner et solidaire dudit coulisseau.

5. Dispositif d'amenage suivant la revendication 1 caractérisé en ce que les moyens de contrôle et de réglage de la course du coulisseau sont constitués par des contacts de fin de course (24, 25) susceptibles de permettre la commande automatique du moyen de déplacement du coulisseau un certain nombre de fois avant chaque opération de tronçonnage ou analogue.

## Claims

1. A device for the supply of metals in bars, designed to be connected to a cutting machine such as a slicing lathe or the like, comprising a member (5) for driving the bar (2) which is mounted in tilting fashion and is capable of driving the bar by wedging in only one of the two to-and-fro paths of the said member (5) and means for the movement of said member (5), said device being characterised in that said driving member (5) is a plate mounted in fork fashion on a moving slide (14) travelling to and fro parallel to the axis of the bar to be cut (2), means (3, 24, 25) being provided for controlling and adjusting the movement and the path of said slide (14).

2. A supply device according to claim 1, characterised in that the driving member or driver (5) is constituted by a part provided with an orifice for the passage of the bar to be cut which has dimensions slightly greater than the cross-section of the bar (2), said part being articulated on the slide (14) so that, in its outward (or return) path, the part tilts backwards, wedging and driving the bar and that, in the return (or outward) path, the part is prevented from tilting by an adjustable stop integral with the slide.

3. A supply device according to claim 1 or 2, characterised in that the slide (14) is mounted on a support (16 to 19) which is arranged beneath the bar to be cut and is adjustable in position orthogonally to the axis of the bar so as to centre the tilting driver (5) with the bar.

4. A supply device according to one of claims 1 to 3, characterised in that the driver (5) is articulated on the slide (14) by means of one or more forks (26) engaging on an axis orthogonal to the axis of the bar to be driven and integral with said slide.

5. A supply device according to claim 1, characterised in that the means for controlling and adjusting the path of the slide are constituted by end of path contacts (24, 25) capable of permitting automatic control of the means for moving the slide a certain number of times before each cutting or similar operation.

## Ansprüche

1. Zuführvorrichtung für metallische Stangen bestimmt zum Vereinigen mit einer Trennmaschine wie etwa eine Motorsäge o. dgl., umfassend ein Mitnahmeorgan (5) für die Stange (2), das hin- und herschwenkbar montiert und geeignet ist, die Stange durch Klemmung entweder beim Vor- oder Rückhub des besagten Organs (5) mitzunehmen, und Mittel zum Bewegen des letzteren, wobei die Vorrichtung dadurch gekennzeichnet ist, daß das besagte Mitnahmeorgan (5) eine Platte ist, die auf eine Kulisse (14) gegabelt ist, die parallel zur Achse der durchzutrennenden Stange (2) hin- und herbeweglich ist, wobei Mittel (3, 24, 25) vorgesehen sind, um die Verschiebung und den Hub der besagten Kulisse (14) zu steuern und zu regeln.

2. Zuführvorrichtung nach Anspruch 1, dadurch gekennzeichnet, daß das Mitnahmeorgan oder der Mitnehmer (5) von einem Teil gebildet wird, das eine Durchtrittsöffnung für die abzulängende Stange aufweist, deren Abmessungen etwas größer als der Querschnitt der Stange (2) sind, wobei das besagte Teil auf der Kulisse (14) derart gelenkig angeordnet ist, daß beim Vorlauf (oder Rücklauf) dieser letzteren das Teil nach hinten die Stange klemmend und mitnehmend schwenkt und daß beim Rücklauf (oder Vorlauf) das Teil durch einen einstellbaren, mit der Kulisse verbundenen Anschlag am Schwenken gehindert wird.

3. Zuführvorrichtung nach Anspruch 1 oder 2, dadurch gekennzeichnet, daß die Kulisse (14) auf einem Support (16 bis 19) montiert ist, der unter der abzulängenden Stange angeordnet und in seiner Position orthogonal zur Achse der Stange derart einstellbar ist, daß der schwenkbare Mitnehmer (5) axial mit der Stange ausgerichtet wird.

4. Zuführvorrichtung nach einem der Ansprüche 1 bis 3, dadurch gekennzeichnet, daß der Mitnehmer (5) auf der Kulisse (14) mit Hilfe einer oder mehrerer Gabeln (26) angelenkt ist, die mit einer mit der Kulisse fest verbundenen Achse orthogonal zur Achse der mitzunehmenden Stange in Eingriff stehen.

5. Zuführvorrichtung nach Anspruch 1, dadurch gekennzeichnet, daß die Mittel zum Steuern und Regeln des Hubs der Kulisse von Endschaltern (24, 25) für den Hub gebildet werden, die geeignet sind, die automatische Steuerung des Mittels zum Verschieben der Kulisse eine bestimmte Anzahl von Malen vor jedem Ablängvorgang o. dgl. zu ermöglichen.

FIG. 1

FIG 2

FIG.3

0 038 771

Coupe AA.

29

30

26

FIG 4

Coupe AA.

32

33

34

35

31

26

FIG 5

FIG. 6

0 038 771